# EUROPÄISCHE PATENTSCHRIFT

(11) **EP 2 638 306 B1**
(45) Veröffentlichungstag und Bekanntmachung des Hinweises auf die Patenterteilung: **28.12.2016**
(21) Anmeldenummer: 11805379.2
(22) Anmeldetag: 20.10.2011
(51) Int. Cl.: F16D 21/06, F16C 35/073

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 18.07.2011 DE 102011079331; 02.12.2010 DE 102010053252; 11.11.2010 DE 102010051123
(43) Veröffentlichungstag der Anmeldung: 18.09.2013
(73) Patentinhaber: Schaeffler Technologies AG & Co. KG, 91074 Herzogenaurach (DE)
(72) Erfinder: HOPPE, Marcus, 77855 Achern (DE)
(86) Internationale Anmeldenummer: PCT/DE2011/001870
(87) Internationale Veröffentlichungsnummer: WO 2012/062268

(56) Entgegenhaltungen:
- EP-A2- 1 975 437
- DE-A1-102005 037 514
- DE-A1-102009 039 991
- FR-A1- 2 956 172
- GB-A- 190 908 320
- US-A- 3 082 048
- US-A- 4 026 614

## Beschreibung

Die Erfindung betrifft eine Drehmomentübertragungseinrichtung in einem Antriebsstrang eines Kraftfahrzeuges, die an einer Getriebeeingangswelle über ein Stützlager abgestützt ist. Insbesondere betrifft die vorliegende Erfindung ein Kupplungsaggregat in einem Antriebsstrang eines Kraftfahrzeuges mit einer Anpreßplatte, einer Gegendruckscheibe und einer zwischen diesen angeordneten Kupplungsscheibe, wobei die Gegendruckscheibe mittels eines Stützlagers drehbar auf einer Getriebeeingangswelle gelagert ist, und wobei das Stützlager einen Lagerinnenring und einen Lageraußenring umfasst.

Ein (Doppel-) Kupplungsaggregat mit einer solchen Lagerung ist aus der DE 10 2005 037 514 bekannt. Das Lager der Zentralplatte (=Gegendruckscheibe beider Einzelkupplungen der Doppelkupplung) ist dort mittels eines sogenannten Zentrallagers auf einer der Getriebeeingangswelle gelagert beziehungsweise axial abgestützt. Das Zentrallager ist über einen Sicherungsring gesichert.

Bei der aus dem Stand der Technik bekannten Festlegung des Lagers besteht bei dessen Demontage die Gefahr der Beschädigung des Lagers, da das Lager zur Übertragung der Schleppmomente eine (gewisse) Presspassung auf der Getriebeeingangswelle aufweist. Da der Lagerinnenring bei einer Demontage selbst nicht erreichbar ist, muß zur Demontage das Lager dadurch abgezogen werden, dass ein Werkzeug an den Lageraußenring angesetzt wird. Schon leichtes Verkippen führt dabei zu einer ungleichen Belastung der Wälzkugeln, sodass einzelne Kugeln oder Teile der Laufbahn überlastet und beschädigt werden können. Dabei kann es zu Eindrücken kommen, die die Lebensdauer des Lagers stark herabsetzen.

Aufgrund der notwendigen Passungen zwischen Zentrallager und der entsprechenden Getriebeeingangswelle ist auch eine Montage des Antriebsstranges mit einem solchen Kupplungsaggregat erschwert.

Zudem bedeutet die Fertigung der notwendigen Passungen zwischen Zentrallager und der entsprechenden Getriebeeingangswelle auch eine Erhöhung der Herstellkosten.

Alternativ ist aus der EP 1 975 437 A2 eine Axiallagerung bekannt, welche eine Doppelkupplung ausschließlich in axialer Richtung an einer Getriebeeingangswelle abstützt. Diese Axiallagerung ist mittelbar über eine Nabe einer Kupplungsscheibe, auf der sich das Axiallager befindet mit einer Getriebeeingangswelle über die Verzahnung der Nabe verbunden. Die radiale Abstützung erfolgt über ein Nadellager zwischen einem röhrenförmigen Abschnitt der Zentralplatte und einer hohlen Getriebeeingangswelle. Auch hier ist der Montageaufwand erheblich. Es ist daher die Aufgabe der vorliegenden Erfindung, eine Drehmomentübertragungseinrichtung der Eingangs genannten Art, und insbesondre ein Kupplungsaggregat der Eingangs genannten Art mit erleichterter Montage und verbesserter Demontagemöglichkeit zur Verwendung in einem Antriebstrang eines Fahrzeuges anzugeben.

Diese Aufgabe wird gelöst durch einen Antriebsstrang eines Kraftfahrzeuges mit einer Drehmomentübertragungseinrichtung, welche an einer Getriebeeingangswelle über ein Stützlager abgestützt ist, wobei Getriebeeingangswelle und Stützlager über eine in Umfangsrichtung formschlüssig wirkende Verbindung miteinander verbunden sind. Als in Umfangsrichtung formschlüssig wirkende Verbindung kann eine axiale Steckverzahnung verwendet werden, bei der an einer Innenumfangsfläche des Lagerinnenrings des Zentrallagers und an einer Außenumfangsfläche der Getriebeeingangswelle miteinander komplementäre Verzahnungen (d.h. zumindest ein Zahn und eine entsprechende Vertiefung) ausgebildet werden.Alternativ kann auch eine oder mehrere Passfederverbindung(en) vorgesehen werden. Weiterhin alternativ kann eine Stirnverzahnung an einer Seitenfläche des Lagerinnenrings und an einer einer solchen Seitenfläche im montierten Zustand der als Kupplungsaggregat ausgebildeten Drehmomentübertragungseinrichtung gegenüberliegende und mit der Getriebeeingangswelle verbundene oder hierzu gehörende Fläche ausgebildet werden.

Die Aufgabe wird auch gelöst durch eine Drehmomentübertragungseinrichtung und ein Stützlager zur Verwendung in dem erfindungsgemässen Anstriebsstrang.

Insbesondere wird diese Aufgabe gelöst durch ein Kupplungsaggregat in einem Antriebsstrang eines Kraftfahrzeuges mit einer Anpreßplatte, einer Gegendruckscheibe und einer zwischen diesen angeordneten Kupplungsscheibe, wobei die Gegendruckscheibe mittels eines Stützlagers drehbar auf einer Getriebeeingangswelle gelagert ist, und wobei das Stützlager einen Lagerinnenring und einen Lageraußenring umfasst, wobei Getriebeeingangswelle und Lagerinnenring über eine in Umfangsrichtung formschlüssig wirkende Verbindung miteinander verbunden sind.

Der Lagerinnenring kann dementsprechend ohne eine Presspassung mit der Getriebeeingangswelle, vorzugsweise mit einer Spielpassung, mit der Getriebeeingangswelle verbunden werden. Über die in Umfangsrichtung formschlüssig wirkende Verbindung können die im Betrieb im Lager auftretenden Schleppkräfte an der Getriebeeingangswelle abgestützt werden.

Aufgrund der Vermeidung einer Presspassung kann der Lagerinnenring mit minimaler Kraft auf die Getriebeeingangswelle aufgeschoben werden und ebenso nach Lösen einer Sicherung (wie eines Sicherungsringes) auch wieder abgezogen werden. Alternativ ist auch eine leichte Übergangspassung möglich, bei der die Verzahnung des Lagerinnenrings etwas Überdeckung (deutlich weniger als bei einer Presspassung) zur Verzahnung der Getriebewelle haben kann. Dies kann die Verhinderung eines Klapperns in der Verzahnung verbessern.

Die vorliegende Erfindung ist also insbesondere bei (Doppel-)Kupplungen verwendbar, die über ein Stützlager verfügen und beispielsweise auf einer der Getriebewellen gelagert sind, und bei denen die Kupplung bei Montage auf den Lagersitz der Getriebeeingangswelle gepresst wird. Vorzugsweise erfolgt die Verwendung der Erfindung dabei bei Doppelkupplungssystemen, allerdings kann eine Verwendung auch für andere Anwendungen, wie Einzelkupplungen oder ZMS Lagerungen sinnvoll sein.

Wie vorstehend teilweise bereits ausgeführt, sind die Nachteile an einer Ausführung mit Preßpassung z.B. die relativ hohen Montagekräfte zum Aufpressen, die Drehbearbeitung des Lagersitzes auf der Getriebeeingangswelle und die erschwerte Demontage der Doppelkupplung. Unter Umständen kann es außerdem sein, dass nach der Demontage das Lager nicht wieder verbaut werden darf und es im Doppelkupplungszusammenbau erst aufwändig getauscht werden muss, oder sogar eine komplett neue Doppelkupplung eingebaut werden muss. Wird demgegenüber der Innenring des Stützlagers und auch die Getriebeeingangswelle mit einer Verzahnung versehen, werden eine leichte Montage und Demontage der Doppelkupplung gewährleistet. Die Montage- und Demontagekräfte können gesenkt werden und es ist ein problemloser Wiederverbau der Kupplung (Stützlager) im Reparaturfall (Demontage DK) möglich. Auch die Fertigung wird vereinfacht, da die Drehbearbeitung des Lagersitzes auf der Getriebewelle entfallen kann. Durch den Wegfall der Drehbearbeitung des Lagersitzes auf der Getriebewelle werden die Kosten für das Gesamtsystem gesenkt.

Als axiale Steckverzahnung kann insbesondere eine auf einer Getriebeeingangswelle ausgebildete Nabenverzahnung einer Kupplungsscheibe (also die Verzahnung zwischen Nabe der Kupplungsscheibe und der zugehörigen Welle) verwendet werden, so dass ein vorhandenes Bauelement einer Einzel- oder Doppelkupplung benutzt werden kann. Beispielsweise kann bei einer Doppelkupplung mit zwei koaxial ineinander geschachtelt angeordneten Getriebeeingangswellen die an der äußeren Eingangswelle für die Verbindung zwischen der Nabe der zugehöriger Kupplungsscheibe und der Welle vorgesehene axiale Steckverzahnung gleichzeitig für die Nabe und für die Verzahnung des Lagerinnenrings verwendet werden. Auf eine Ausbildung einer separaten Steckverzahnung kann in diesem Falle also verzichtet werden.

Die Getriebeeingangswelle ist bevorzugt eine Hohlwelle eines Doppelkupplungsgetriebes.

Die in Umfangsrichtung formschlüssig wirkende Verbindung wird bevorzugt über einen Sicherungsring oder ein ähnliches Sicherungselement wie eine Wellenmutter gegen ein axiales Lösen gesichert.

Weiterhin kann ein erstes elastisches Element vorgesehen werden, dass den Lagerinnenring in axialer Richtung gegen das Sicherungselement vorbelastet. Weiterhin oder alternativ kann ein zweites elastisches Element vorgesehen sein, das die in Umfangsrichtung formschlüssig wirkende Verbindung in Umfangsrichtung vorbelastet, so dass beispielsweise ein Rattern der Verbindung bei wechselnden Belastungen aufgrund Drehmomentschwankungen eines Verbrennungsmotors zu vermeiden.

Das Stützlager ist bevorzugt ein Kugellager, das einen Lagerinnenring und einen Lageraußenring sowie zwischen beiden angeordnete Wälzkugeln umfasst.

Gemäß einem bevorzugten Ausführungsbeispiel weisen die Verzahnung des Lager und/oder die Verzahnung der Getriebewelle Einfädelfasen auf, um das Einfädeln der Verzahnungen ineinander zu erleichtern

Weitere bevorzugte Ausführungsbeispiele sind Gegenstand weiterer abhängigen Ansprüche.

Ein Ausführungsbeispiel der Erfindung wird anhand der Figuren 1 bis 3 näher erläutert. Dabei zeigen:
Figur 1 einen Halbschnitt durch ein Kupplungsaggregat nach einem ersten Ausführungsbeispiel, wobei der Lagerinnenring auf der Nabenverzahnung sitzt und mit dieser die formschlüssige Verbindung bildet,
Figur 2 die Befestigung eines Stützlagers auf einer Getriebeeingangswelle nach einem weiteren Ausführungsbeispiel, wobei eine Passfederverbindung zwischen Lagerinnenring und Getriebeeingangswelle vorgesehen ist,
Figur 3 ein weiteres Ausführungsbeispiels eines Stützlagers zur Verwendung in einem Kupplungsaggregats in Verbindung mit einer entsprechenden Getriebeeingangswelle.

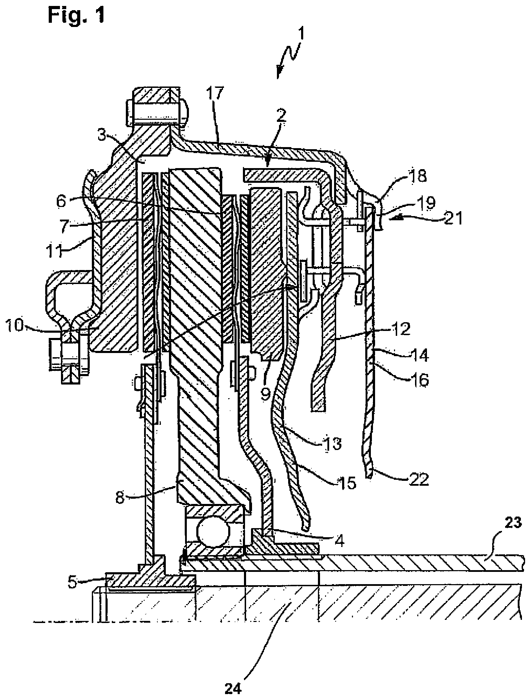

Das in Figur 1 dargestellte Kupplungsaggregat 1 umfasst zwei Reibungskupplungen 2, 3, die im ausgerückten, also geöffneten Zustand, dargestellt sind. Das Kupplungsaggregat 1 ist Teil eines Antriebsstranges eines Kraftfahrzeuges, wobei unter Kraftfahrzeug auch Traktoren, Arbeitsmaschinen, Lastkraftwagen, Personenkraftwagen und dergleichen verstanden werden. Der Antriebsstrang verbindet einen Verbrennungsmotor mit angetriebenen Rädern und umfasst neben dem Kupplungsaggregat ein Parallelschaltgetriebe sowie weitere Übertragungsrnittel wie Wellen, Differentialgetriebe und dergleichen. Das Kupplungsaggregat bildet somit eine Doppelkupplung, die zwei Kupplungsscheiben 4, 5 umfasst, die mit unterschiedlichen Getriebeeingangswellen verbindbar sind.

Die Kupplungsscheiben 4, 5 tragen radial außen Reibbeläge 6, 7, die axial einspannbar sind zwischen einer den beiden Reibungskupplungen 2 und 3 gemeinsamen Gegendruckscheibe 8 und einer der jeweiligen Reibungskupplung 2 beziehungsweise 3 zugeordneten Anpressplatte 9, 10. Die Gegendruckscheibe 8 bildet einen Bestandteil eines Schwungrads, das mit einem Antriebsmotor verbunden ist. Die Gegendruckscheibe 8 ist über axial verlaufende Bereiche, die hier nicht näher dargestellt sind, mit einer Antriebsplatte 11 beziehungsweise einem Antriebskorb verbunden. Die Antriebsplatte 11 ist als Mitnehmerring ausgebildet. Die axial verlaufenden Bereiche, die eine Verbindung zwischen der Gegendruckscheibe 8 und der Antriebsplatte 11 herstellen, können entweder an der Gegendruckscheibe 8 oder an der Antriebsplatte 11 angeformt sein oder aber auch an beiden Teilen 8, 11 zumindest teilweise vorgesehen sein. Die Antriebsplatte 11 kann entweder nach Art eines Drehmomentwandlers mit einer zum Beispiel an der Kurbelwelle des Antriebsmotors vorgesehenen Antriebsplatte verschraubbar sein oder aber mit einem motorseitig angeordneten Antriebselement über eine axiale Steckverbindung verbindbar sein.

In Figur 1 sind des Weiteren eine äußere Getriebeeingangswelle 23, die eine Hohlwelle ist, sowie eine axial in dieser angeordnete innere Getriebeeingangswelle 24 dargestellt. Die äußere Getriebeeingangswelle 23 ist mit der Kupplungsscheibe 4 drehfest, beispielsweise über eine Steckverzahnung, verbunden, entsprechend ist die innere Getriebeeingangswelle 24 mit der Kupplungsscheibe 5 drehfest, ebenfalls beispielsweise über eine Steckverzahnung, verbunden.

Die Gegendruckscheibe 8 ist über eine Lagerung 12 getriebeseitig gelagert und zumindest in einer Axialrichtung festgelegt, um die zumindest für eine der Reibungskupplungen erforderlichen Schließkräfte axial abzufangen. Die Gegendruckplatte (auch als Zentralplatte bezeichnet) ist über Wälzköperlager auf der äußeren Getriebeeingangswelle gelagert, wobei ein Lagerinnenring dieses Wälzkörperlagers eine Verzahnung aufweist, welche zu einer Nabenverzahnung passt, welche an der äußeren Getriebeeingangswelle ausgebildet ist und die Verbindung zwischen einer Nabe der Kupplungsscheibe der getriebeseitig angeordneten Kupplung und dieser Getriebeeingangswelle bildet.

Wie aus Figur 1 erkennbar ist, besitzen die Kupplungsscheiben 4 und 5 axial zwischen ihren beiden ringförmigen Reibbelägen 6 und 7 eine so genannte Belagfederung, die einen progressiven Aufbau und Abbau des von den Reibungskupplungen 2, 3 übertragbaren Drehmoments über zumindest einen Teilbereich des Betätigungsweges gewährleisten.

Die Anpressplatte 9 ist mittelbar oder unmittelbar vorzugsweise über blattfederartige Elemente mit der Gegendruckscheibe 8 drehfest, jedoch begrenzt axial verlagerbar verbunden. Die Anpressplatte 10 der Reibungskupplung 3 ist in ähnlicher Weise mit der Gegendruckscheibe 8 antriebsmäßig gekoppelt. An der Gegendruckscheibe 8 ist ein gehäuseartiges Bauteil 12 befestigt, das hier als Blechdeckel ausgebildet ist. Axial beiderseits dieses Bauteils 12 sind in ringförmiger Anordnung vorgesehene Hebelelemente 13, 14 vorgesehen, mittels derer die jeweils zugeordnete Reibungskupplung 2, 3 betätigbar ist.

Die Hebelelemente 13, 14 können jeweils ein ringartiges Bauteil bilden, das tellerfederähnliche Eigenschaften aufweist, also federnd in seiner Konizität veränderbar ist. Im Folgenden werden die zu einem ringartigen Bauteil zusammengefassten Hebelelemente 13, 14 als Hebelfeder 15 beziehungsweise 16 bezeichnet. Diese Hebelfedern 15, 16 besitzen vorzugsweise jeweils eine Federeigenschaft, die gewährleistet, dass sich diese tendenzmäßig in eine kegelstumpfförmige Position aufstellen, die einem geöffneten Zustand der Reibungskupplungen 2 und 3 entspricht.

Die Anpressplatte 10 trägt Zugmittel 17, die sich axial erstrecken und an ihrem der Anpressplatte 10 abgewandten Ende 18 eine Schwenklagerung beziehungsweise Abwälzauflage 19 tragen, an der die Hebelfeder 16 kippbar beziehungsweise verschwenkbar abgestützt ist. Bei dem dargestellten Ausführungsbeispiel ist die Abwälzauflage 19 einstückig mit den Zugmitteln 17 ausgebildet und durch einen radial nach innen hin gerichteten ringförmigen Bereich gebildet.

Die Zugmittel 17 können durch einzelne über den Umfang verteilte hakenartige Bauteile gebildet sein. In vorteilhafter Weise können diese Zugmittel 17 jedoch auch zu einem vorzugsweise aus Blech hergestellten Bauteil zusammengefasst werden, welches einen vorzugsweise geschlossenen ringförmigen Bereich besitzt, von dem aus mehrere axiale Schenkel ausgehen können, die mit der Anpressplatte 10 fest verbunden sind.

Radial innerhalb der Abwälzauflage 19 ist die Hebelfeder 16 an einem ringförmigen Abstützring 20 abgestützt. Der ringförmige Abstützring 20 ist axial zwischen dem gehäuseartigen Bauteil 12 und der Hebelfeder 16 eingespannt und bildet ein Bestandteil einer Nachstelleinrichtung 21, mittels der zumindest der an den Reibbelägen 7 auftretende Verschleiß wenigstens teilweise automatisch ausgeglichen werden kann. Auf die Nachstelleinrichtung kommt es zum Verständnis der Erfindung nicht an, daher wird diese hier nicht näher beschrieben. Zum Schließen der Reibungskupplung 3 werden die radial inneren Spitzen 22 der Hebelfeder 16 in Richtung nach links beaufschlagt. Hierfür ist ein die Schließkraft zumindest im Wesentlichen in die Reibungskupplung 3 einleitendes Betätigungselement, wie zum Beispiel ein Betätigungslager vorgesehen, welches nicht näher dargestellt ist. Ein derartiges Betätigungselement bildet einen Bestandteil eines Betätigungssystems, welches als pneumatisches, hydraulisches, elektrisches oder mechanisch betätigtes Betätigungssystem ausgebildet sein kann oder aber eine Kombination der erwähnten Betätigungsmöglichkeiten aufweist, also beispielsweise als elektrohydraulisches Betätigungssystem ausgebildet ist.

Die die Drehmomentübertragung und die axiale Verlagerbarkeit der Anpressplatte 10 gewährleistenden Federmittel, wie insbesondere Blattfedern, die in an sich bekannter Weise die Bauteile 8 und 10 miteinander verbinden, besitzen vorzugsweise eine definierte axiale Vorspannung, die gewährleistet, dass die Anpressplatte 10 in Öffnungsrichtung der Reibungskupplung 3 beaufschlagt wird. Dies bedeutet, dass bei dem dargestellten Ausführungsbeispiel die Anpressplatte 10 axial in Richtung nach links von der Gegendruckscheibe 8 durch die erwähnten vorgespannten Blattfedern weggedrängt wird. Dadurch werden die Reibbeläge 7 freigegeben. Die Vorspannung der entsprechenden Federmittel, wie insbesondere Blattfedern, soll weiterhin gewährleisten, dass die Abwälzauflage 19 stets axial in Richtung der radial äußeren Bereiche der Hebelfeder 16 gedrängt wird.

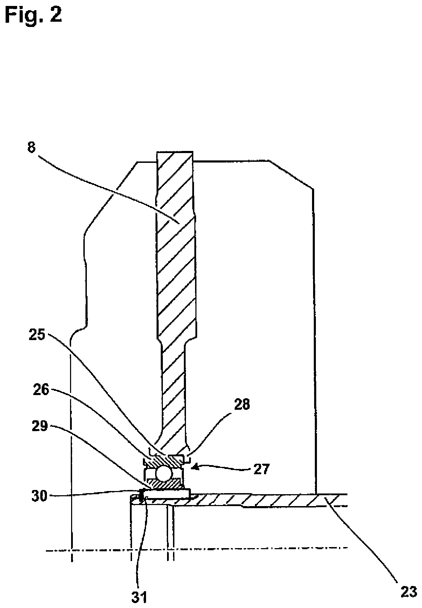

Figur 2 zeigt eine Ansicht der Befestigung der Gegendruckplatte 8 an der äußeren Getriebeeingangswelle 23 über eine Passfederverbindung als einer möglichen Art der formschlüssigen Verbindung. Die Gegendruckplatte 8 umfasst in ihrem radial inneren Bereich eine Öffnung 24 zur Aufnahme eines Lageraußenringes eines Stützlagers 27. Das Stützlager 27 ist hier ein Kugellager, wobei hier auch jeder andere für den Einsatzzweck geeignete Wälzlagertyp vorgesehen sein kein. Die Öffnung 25 umfasst eine Anschlagnase 28, die den Lageraußenring 26 des Stützlagers 27 zumindest in einer Richtung festlegt. Ein Lagerinnenring 29 ist auf der äußeren Getriebeeingangswelle 23 gelagert. Ein Sicherungsring 30, der in einer Nut 31 der Welle 23 angeordnet ist, legt den Lagerinnenring 29 in eine der axialen Richtungen fest. Da die Anschlagnase 28 und der Sicherungsring 30 auf beiden Seiten des Stützlagers 27 angeordnet sind, ist das Kugellager in beide Axialrichtungen festgelegt. Zwischen dem Lagerinnenring und der äußeren Getriebeeingangswelle ist eine Passfeder als formschlüssige Verbindung vorgesehen.

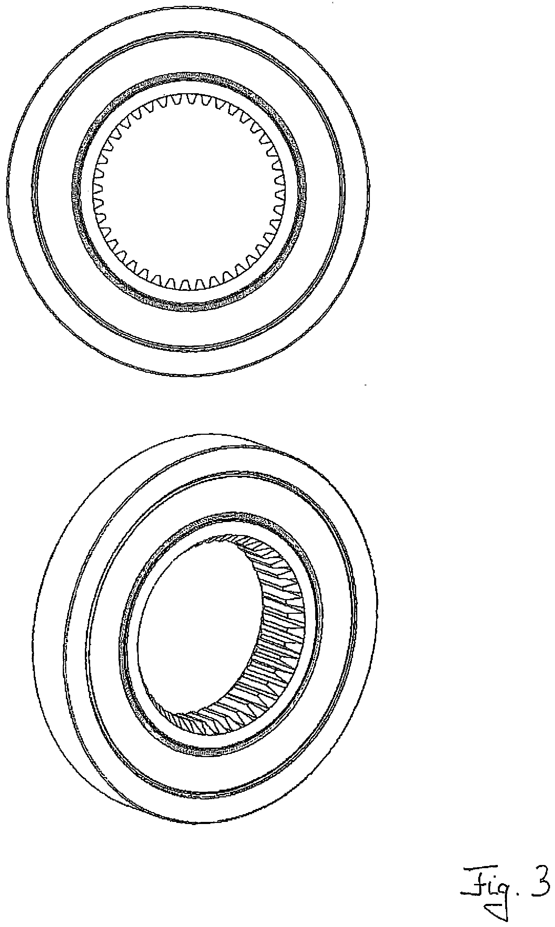

Figur 3 zeigt ein Ausführungsbeispiel eines Stützlagers zur Verwendung in einem Kupplungsaggregats in Verbindung mit einer entsprechend ausgebildeten Getriebeeingangswelle. Dabei ist im oberen Teil von Figur 3 eine Draufsicht auf das Lager und im unteren Teil eine räumliche Ansicht des Lagers dargestellt.

Die Getriebeeingangswelle ist vorliegend Teil einer Doppelkupplung, die über ein Stützlager verfügt und auf einer ihrer Getriebewellen (bevorzugt der als Hohlwelle ausgebildeten Eingangswelle) gelagert ist. Vorgeschlagen wird jetzt, den Innenring des Stützlagers und einen Teilbereich der Hohlwelle mit einer Verzahnung zu versehen, um damit eine leichte Montage und Demontage der Doppelkupplung zu gewährleisten. Es ergibt sich für diese Anordnung / Montage in einem Doppelkupplungsgetriebe auch allgemein bei Getriebe-Kupplungssystemen ein klarer Montage- und Demontagevorteil. Zusätzlich können durch den Wegfall der Drehbearbeitung des Lagersitzes auf der Getriebewelle die Kosten für das Gesamtsystem gesenkt werden.

Allgemein wird vorliegend also ein Drehmomentübertragungssystem aus (Mehrfach-) Kupplung und Getriebe gezeigt, bei dem die Kupplung über ein Stützlager auf einer Getriebeeingangswelle / einer der Getriebeeingangswellen abgestützt ist, und bei dem Stützlager und GEW über eine axiale Steckverzahnung verbunden sind. Diese Verbindung kann sowohl als Loslager als auch als Festlager ausgebildet sein.

## Patentansprüche

1. Antriebsstrang eines Kraftfahrzeuges mit einer Drehmomentübertragungseinrichtung, welche an einer Getriebeeingangswelle (23) über ein Stützlager (27) abgestützt ist, wobei Getriebeeingangswelle (23) und Stützlager (27) über eine in Umfangsrichtung formschlüssig wirkende Verbindung miteinander verbunden sind, **dadurch gekennzeichnet, dass** als in Umfangsrichtung formschlüssig wirkende Verbindung eine axiale Steckverzahnung verwendet wird, bei der an einer Innenumfangsfläche des Lagerinnenrings (29) des Stützlagers (27) und an einer Außenumfangsfläche der Getriebeeingangswelle (23) miteinander komplementäre Verzahnungen ausgebildet sind, oder wobei als in Umfangsrichtung formschlüssig wirkende Verbindung eine oder mehrere Passfederverbindung(en) vorgesehen sind, oder wobei eine Stirnverzahnung an einer Seitenfläche des Lagerinnenrings (29) und an einer einer solchen Seitenfläche im montierten Zustand der als Kupplungsaggregat (1) ausgebildeten Drehmomentübertragungseinrichtung gegenüberliegenden und mit der Getriebeeingangswelle (23) verbundenen oder hierzu gehörenden Fläche ausgebildet sind..

2. Antriebsstrang nach Anspruch 1, wobei die Drehmomentübertragungseinrichtung als Kupplungsaggregat (1) mit einer Anpreßplatte (9,10), einer Gegendruckscheibe (8) und einer zwischen diesen angeordneten Kupplungsscheibe (4,5) ausgebildet ist, wobei die Gegendruckscheibe (8) mittels eines Stützlagers (27) drehbar auf einer Getriebeeingangswelle (23) gelagert ist, und wobei das Stützlager (27) einen Lagerinnenring (29) und einen Lageraußenring (26) umfasst, wobei Getriebeeingangswelle (23) und Lagerinnenring (29) über die in Umfangsrichtung formschlüssig wirkende Verbindung miteinander verbunden sind.

3. Antriebsstrang nach Anspruch 2, wobei zwischen einer Nabe der Kupplungsscheibe(4) und der Getriebeeingangswelle (23) eine axiale Steckverzahnung ausgebildet ist, und wobei der Lagerinnenring (29) ebenfalls auf der axialen Steckverzahnung sitzt und mit dieser die formschlüssig wirkende Verbindung bildet.

4. Antriebsstrang nach Anspruch 2 oder 3, wobei der Lagerinnenring (29) über eine Spielpassung mit der Getriebeeingangswelle (23) verbunden ist.

5. Antriebsstrang nach einem der Ansprüche 1 bis 4, wobei die Getriebeeingangswelle (23) eine Hohlwelle eines Doppelkupplungsgetriebes ist.

6. Antriebsstrang nach einem der Ansprüche 1 bis 4, wobei die in Umfangsrichtung formschlüssig wirkende Verbindung über einen Sicherungsring (30) oder ein ähnliches Sicherungselement wie eine Wellenmutter gegen ein axiales Lösen gesichert ist.

7. Antriebsstrang nach einem der Ansprüche 1 bis 6, wobei ein erstes elastisches Element vorgesehen ist, das den Lagerinnenring (29) in axialer Richtung gegen das Sicherungselement (30) vorbelastet.

8. Antriebsstrang nach einem der Ansprüche 1 bis 7, wobei ein zweites elastisches Element vorgesehen ist, das die in Umfangsrichtung formschlüssig wirkende Verbindung in Umfangsrichtung vorbelastet.

9. Antriebsstrang nach einem der Ansprüche 1 bis 8, wobei das Stützlager (27) ein Kugellager ist, das einen Lagerinnenring (29) und einen Lageraußenring (26) sowie zwischen beiden angeordnete Wälzkugeln umfasst.

10. Drehmomentübertragungseinrichtung und Stützlager zur Verwendung in einem Antriebsstrang nach einem der Ansprüche 1 bis 10.

## Claims

1. Drive train of a motor vehicle having a torque transmission device which is supported via a supporting bearing (27) on a transmission input shaft (23), the transmission input shaft (23) and the supporting bearing (27) being connected to one another via a connection which acts in the circumferential direction in a positively locking manner, **characterized in that** an axial spline-type gearing system is used as a connection which acts in the circumferential direction in a positively locking manner, in which spline-type gearing system spline systems which are complementary to one another are configured on an inner circumferential face of the bearing inner ring (29) of the supporting bearing (27) and on an outer circumferential face of the transmission input shaft (23), or wherein one or more feather key connections are provided as a connection which acts in the circumferential direction in a positively locking manner, or a spur toothing system is configured on a side face of the bearing inner ring (29) and on a surface which is connected to the transmission input shaft (23) or belongs to it and lies opposite a side face of this type in the assembled state of the torque transmission device which is configured as a clutch assembly (1).

2. Drive train according to Claim 1, the torque transmission device being configured as a clutch assembly (1) with a pressure plate (9, 10), a counterpressure plate (8) and a clutch plate (4, 5) which is arranged between them, the counterpressure plate (8) being mounted rotatably on a transmission input shaft (23) by means of a supporting bearing (27), and the supporting bearing (27) comprising a bearing inner ring (29) and a bearing outer ring (26), the transmission input shaft (23) and the bearing inner ring (29) being connected to one another via the connection which acts in the circumferential direction in a positively locking manner.

3. Drive train according to Claim 2, an axial spline-type gearing system being configured between a hub of the clutch plate (4) and the transmission input shaft (23), and the bearing inner ring (29) likewise being seated on the axial spline-type gearing system and forming the connection which acts in a positively locking manner with the said spline-type gearing system.

4. Drive train according to Claim 2 or 3, the bearing inner ring (29) being connected to the transmission input shaft (23) via a clearance fit.

5. Drive train according to one of Claims 1 to 4, the transmission input shaft (23) being a hollow shaft of a double clutch transmission.

6. Drive train according to one of Claims 1 to 4, the connection which acts in the circumferential direction in a positively locking manner being secured against axial release via a securing ring (30) or a similar securing element such as a shaft nut.

7. Drive train according to one of Claims 1 to 6, a first elastic element being provided which preloads the bearing inner ring (29) in the axial direction against the securing element (30).

8. Drive train according to one of Claims 1 to 7, a second elastic element being provided which preloads the connection in the circumferential direction, which connection acts in the circumferential direction in a positively locking manner.

9. Drive train according to one of Claims 1 to 8, the supporting bearing (27) being a ball bearing which comprises a bearing inner ring (29), a bearing outer ring (26) and rolling balls which are arranged between the two.

10. Torque transmission device and supporting bearing for use in a drive train according to one of Claims 1 to 10.

## Revendications

1. Chaîne cinématique d'un véhicule automobile avec un dispositif de transmission de couple maintenu au niveau d'un arbre d'entrée de boîte de vitesses (23) par un palier de maintien (27), l'arbre d'entrée de boîte de vitesses (23) et le palier de maintien (27) étant reliés entre eux par l'intermédiaire d'une liaison agissant par complémentarité de formes dans la direction périphérique, **caractérisée en ce que** la liaison agissant par complémentarité de formes dans la direction périphérique est un endentement enfichable axial dans lequel des endentements complémentaires entre eux sont réalisés au niveau d'une surface périphérique intérieure de la bague intérieure de palier (29) du palier de maintien (27) et au niveau d'une surface de périphérie extérieure de l'arbre d'entrée de boîte de vitesses (23) ou la liaison agissant par complémentarité de formes dans la direction périphérique prévue étant une ou plusieurs liaisons à clavette ou un endentement avant étant réalisé au niveau d'une surface latérale de la bague intérieure de palier (29) et au niveau d'une surface opposée à une telle surface latérale à l'état monté du dispositif de transmission de couple réalisé sous la forme d'un groupe d'embrayage (1) et relié à l'arbre d'entrée de boîte de vitesses (23) ou appartenant à celui-ci.

2. Chaîne cinématique selon la revendication 1, le dispositif de transmission de couple prenant la forme d'un groupe d'embrayage (1) avec une plaque de compression (9, 10) d'un disque de contre-pression (8) et d'un disque d'embrayage (4, 5) disposé entre eux, le disque de contre-pression (8) étant disposé sur un arbre d'entrée de boîte de vitesses (23) de façon à pouvoir tourner à l'aide d'un palier de maintien (27) et le palier de maintien (27) comprenant une bague intérieure de palier (29) et une bague extérieure de palier (26), l'arbre d'entrée de boîte de vitesses (23) et la bague intérieure de palier (29) étant reliés entre eux par l'intermédiaire de la liaison agissant par complémentarité de formes dans la direction périphérique.

3. Chaîne cinématique selon la revendication 2, un endentement enfichable axial étant réalisé entre un moyeu du disque d'embrayage (4) et l'arbre d'entrée de boîte de vitesses (23) et la bague intérieure de palier (29) reposant également sur l'endentement enfichable axial et formant avec ledit endentement une liaison agissant par complémentarité de formes.

4. Chaîne cinématique selon la revendication 2 ou 3, la bague intérieure de palier (29) étant reliée à l'arbre d'entrée de boîte de vitesses (23) via un ajustement du jeu.

5. Chaîne cinématique selon l'une quelconque des revendications 1 à 4, l'arbre d'entrée de boîte de vitesses (23) étant couplé à un arbre creux d'une boîte de vitesses à double embrayage.

6. Chaîne cinématique selon l'une quelconque des revendications 1 à 4, la liaison agissant par complémentarité de formes dans la direction périphérique étant fixée de façon à empêcher un desserrage axial via une bague de fixation (30) ou un élément de fixation similaire, par exemple un écrou d'arbre.

7. Chaîne cinématique selon l'une quelconque des revendications 1 à 6, un premier élément élastique étant prévu pré-sollicitant la bague intérieure de palier (29) contre l'élément de fixation (30) dans la direction axiale.

8. Chaîne cinématique selon l'une quelconque des revendications 1 à 7, un deuxième élément élastique étant prévu, cet élément présollicitant dans la direction périphérique la liaison agissant par complémentarité de formes dans la direction périphérique.

9. Chaîne cinématique selon l'une quelconque des revendications 1 à 8, le palier de maintien (27) étant un palier sphérique comprenant une bague intérieure de palier (29) et une bague extérieure de palier (26) ainsi que des sphères de roulement disposées entre elles.

10. Dispositif de transmission de couple et palier de maintien à utiliser dans une chaîne cinématique selon l'une quelconque des revendications 1 à 10.
